# EUROPEAN PATENT APPLICATION

(11) **EP 1 265 437 A1**
(43) Date of publication of application: **11.12.2002**
(21) Application number: 02012307.1
(22) Date of filing: 04.06.2002
(51) Int. Cl.: H04N 5/235

(54) **Imaging apparatus and mobile communication apparatus**

(30) Priority: 04.06.2001 JP 2001168638
(71) Applicant: Kabushiki Kaisha Toshiba, Tokyo (JP)
(72) Inventor: Hayashida, Ikuo, Kabushiki Kaisha Toshiba, Minato-ku, Tokyo 105-8001 (JP)
(74) Representative: HOFFMANN - EITLE

(57) **Abstract**

The mobile communication apparatus in this invention can select a method for measuring light intensity value based on an imaging field angle of a camera unit (111) and a direction of a camera unit (111). The mobile communication apparatus can calculate a photography exposure to capture image data based on the selected method.

## Description

This invention relates to an imaging apparatus or a mobile communication apparatus including a camera unit.

Cellular phones increasingly use camera units to capture image data, for example, still pictures or moving pictures. The cellular phone can transmit the captured image data to another communication party over a radio channel. The cellular phone is, for example, Personal Handy phone System (PHS), Personal Digital Cellular (PDC).

In recent years, some mobile communication network providers use the high-speed mobile communication system. It is useful that the cellular phone is used in the system. One of the systems is Wideband Code Division Multiple Access (W-CDMA) communication method.

Now, many electronic companies are making cellular phones having a camera unit to capture image data. Communicating image data over radio channel will become more popular in the future.

Cellular phone that include camera units can be used to capture image data located at various distances from the cellular phone. The camera units installed on cellular phones are typically moveable to allow the user to capture different image data. For example, the camera unit can be in a first position to capture close-up image data of the user and then the camera unit can be in a second position to capture image data of a far away scene. In addition to changing the direction of the camera unit, the position of a focusing element, such as a lens, within the camera unit may also be changed. The position of the focusing element also affects the imaging field angle. An image processor may also adjust the imaging field angle.

The exposure setting of the camera unit is typically set by a user and is based on the image data that will be captured. An exposure setting for a close-up image will not work well when the user captures a far away scene. Manually adjusting the exposure setting can be time consuming and burdensome.

Therefore, there exists a need in the art for a mobile communication apparatus that does not require the user to provide photography exposure settings when capturing different image data.

The present invention has an object to provide an imaging apparatus or a mobile communication apparatus for adjusting a proper photography exposure automatically to capture image data.

The imaging apparatus or mobile communication apparatus in this invention can select a method for measuring light intensity value based on an imaging field angle of a camera unit and a direction of a camera unit.

The mobile communication apparatus can calculate a photography exposure to capture image data based on the selected method. In order to achieve the object, the present invention provides an imaging apparatus for capturing image data, the apparatus comprising: a moveable camera unit having a variable image field angle; a direction detector configured to detect a direction of the camera unit; an image field angle detector configured to detect the image field angle of the camera unit; a photosensitive element having a photosensitive surface area; and a selector configured to select which portion of the photosensitive element will be used to calculate an exposure setting based on the detected direction and the detected image field angle.

The present invention also provides a method in an imaging apparatus for capturing image data wherein the apparatus has a moveable camera unit having a variable image field angle, the method comprising: detecting a direction of the camera unit; detecting an image field angle of the camera unit; and selecting which portion of a photosensitive element in the camera unit will be used to calculate an exposure setting based on the detected direction and the detected image field angle.

The present invention also provides a control unit in an imaging apparatus for capturing image data wherein the apparatus has a moveable camera unit having a variable image field angle, the method comprising: first detector configured to detect a direction of the camera unit; second detector configured to detect the image field angle of the camera unit; and selector configured to select which portion of a photosensitive element in the camera unit will be used to calculate an exposure setting based on the detected direction and the detected image field angle.

The present invention also provides a mobile communication apparatus for capturing image data, the apparatus comprising: a moveable camera unit having a variable image field angle; a direction detector configured to detect a direction of the camera unit; an image field angle detector configured to detect the image field angle of the camera unit; a photosensitive element having a photosensitive surface area; a selector configured to select which portion of the photosensitive element will be used to calculate an exposure setting based on the detected direction and the detected image field angle; and a transmitter configured to transmit image data.

The present invention also provides a method in an mobile communication apparatus for capturing image data wherein the apparatus has a moveable camera unit having a variable image field angle, the method comprising: detecting a direction of the camera unit; detecting an image field angle of the camera unit; selecting which portion of a photosensitive element in the camera unit will be used to calculate an exposure setting based on the detected direction and the detected image field angle; and transmitting image data.

The present invention also provides a control unit in an mobile communication apparatus for capturing image data wherein the apparatus has a moveable camera unit having a variable image field angle, the method comprising: first detector configured to detect a direction of the camera unit; second detector configured to detect an image field angle of the camera unit; selector configured to select which portion of a photosensitive element in the camera unit will be used to calculate an exposure setting based on the detected direction and the detected image field angle; and transmitter configured to transmit image data.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows a block diagram of a mobile communication apparatus in an embodiment according to this invention;
FIG. 2 shows one of the outside figures of the mobile communication apparatus to explain an angle of a camera unit in an embodiment according to this invention;
FIG. 3 shows one of the outside figures of the mobile communication apparatus to explain a direction of a camera unit in an embodiment according to this invention;
FIG. 4 shows main elements in a control unit in an embodiment according to this invention;
FIG. 5 shows a data table for selecting a method for determining a photography exposure in the camera unit in an embodiment according to this invention;
FIG. 6 shows an explanation about a third method for determining a photography exposure in the camera unit in an embodiment according to this invention;
FIG. 7 shows an explanation about a first method for determining a photography exposure in the camera unit in an embodiment according to this invention;
FIG. 8 shows a explanation about a second method for determining a photography exposure in the camera unit in an embodiment according to this invention; and
FIG. 9 shows a flow chart for s electing a method for determining a photography exposure in the camera unit in an embodiment according to this invention.

An embodiment in the invention will be described with reference to the accompanying drawings.

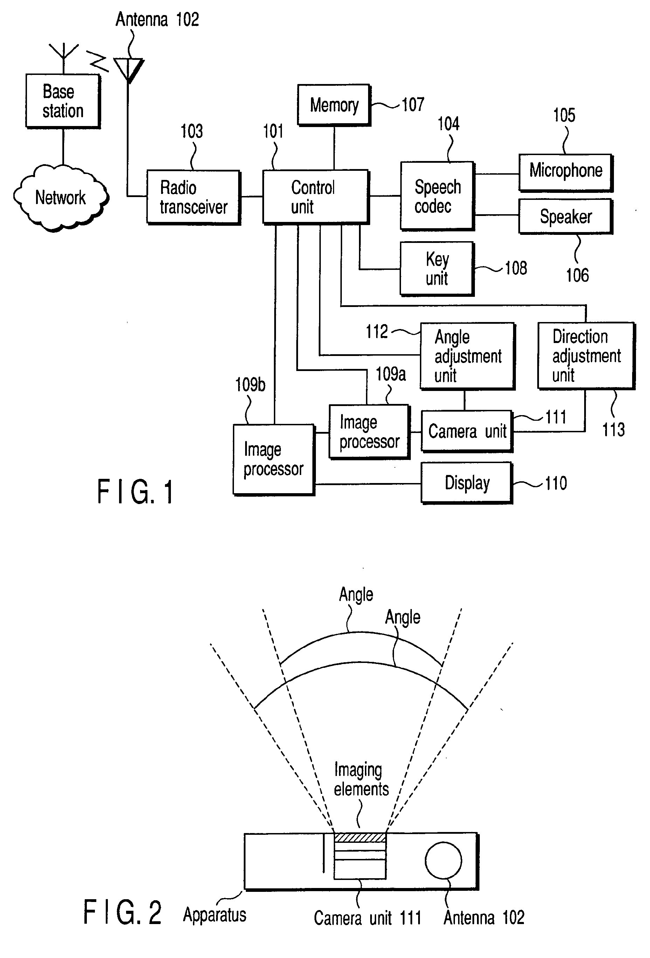

FIG. 1 shows a mobile communication apparatus of one embodiment in the invention. The mobile communication apparatus can be, for example, a cellular phone, personal digital assistant or imaging apparatus. The mobile communication apparatus is capable of connecting to another party connected to a communication network system through a base station. The communication network system can use Wideband Code Division Multiple Access (W-CDMA) as a radio communication access method. The mobile communication apparatus is used in the system.

In one embodiment, the apparatus can transmit data at a high-speed rate. For example, the apparatus may transmit data in a 2 GHz bandwidth with using 5 MHz. After synchronizing with a base station in the system, the apparatus can connect to the base station connected to a network.

The apparatus shown in figure 1 includes an antenna 102, that may be extendible. The length of antenna 102 may be reduced by making the antenna extendable. A radio transceiver 103 transmits a signal to a base station and receives a signal from the base through the antenna 102. The radio communication unit 103 may use the W-CDMA communication method. The transmitted signal is outputted from the codec 104 through the controller 101. The received radio signal is inputted to codec 104 through the controller 101. For example, the radio communication unit 103 uses 4.096 Mcps chip rate as a spread code. The radio communication unit 103 modulates a signal with Quadrature Phase Shift Keying (QPSK) as primary modulation method.

The codec 104 encodes a signal inputted from a microphone 105. The encoded signal is outputted to the radio communication unit 103 through the controller 101. The codec 104 decodes a signal inputted from the radio transceiver 103. The decoded signal is outputted to the speaker 106.

A memory 107 can be comprised by a semiconductor memory such as a RAM or ROM. The memory 107 stores software programs executed by the control unit 101. The memory 107 can also store image data captured by a camera unit 111, menu data displayed by the display 110. Camera unit 111 may be implemented with any device that converts an image into an electrical signal.

Memory 107 can also store a data table for selecting a method for measuring light intensity value based on a detected direction and a detected imaging field angle of the camera unit 111. The table data includes a plurality of the methods. The control unit 101 selects one of the methods. The methods used for selecting light intensity are described in detail below.

A key unit 108 comprises ten keys, a four-way key, a software key and various function keys. The user inputs data or instructions with using the key unit 108.

An image data processor 109a calculates a proper exposure value based on the selected method. The exposure value may include an aperture setting, exposure time, combination aperture setting and exposure time or some other exposure value. The image data processor 109a transmits the exposure value to control unit 101 and the control unit 101 makes necessary adjustments to the camera unit 111 based on the calculated exposure value.

The image data processor 109a inputs the image data captured by the adjusted camera unit 111 to an image data processor 109b. The image data processor 109b encodes the inputted image data and converts the encoded data into data for transmitting to a base station. The transmission may use the W-CDMA communication method. The image data processor 109b also inputs the converted data to the control unit 101. The image processor 109b decodes image data stored in the memory 107 and displays the decoded image data on a display 110.

The display 110 comprises a Liquid Crystal Display (LCD), a plasma display or other thin screen display. The display 110 displays image data or text characters.

The camera unit 111 comprises imaging elements, for example, a Charge-Coupled Device (CCD) or Complementary Metal Oxide Semiconductor (CMOS). The camera unit 111 can capture image data. The image data includes, for example, still pictures or moving pictures.

The camera unit 111 can calculate an exposure time for its imaging elements based on a calculated exposure value received from image processor 109a.

The camera unit 111 can capture image data based on the calculated exposure time and the calculated exposure value. The camera unit 111 outputs the captured image data to the image processor 109b.

An angle adjustment unit 112 adjusts an imaging field angle of the camera unit 111 for capturing image data. FIG. 2 shows the imagining field angle. The angle adjustment unit 112 instructs the camera unit 111 to change a position of imaging elements in the camera unit 111. The user of the apparatus can adjust the angle. The angle adjustment unit 112 also detects an angle of the camera unit 111 and informs the detected angle of the control unit 101.

A direction adjustment unit 113 adjusts a direction of the camera unit 111 for capturing image data. The user of the apparatus can adjust the direction adjustment unit 113.

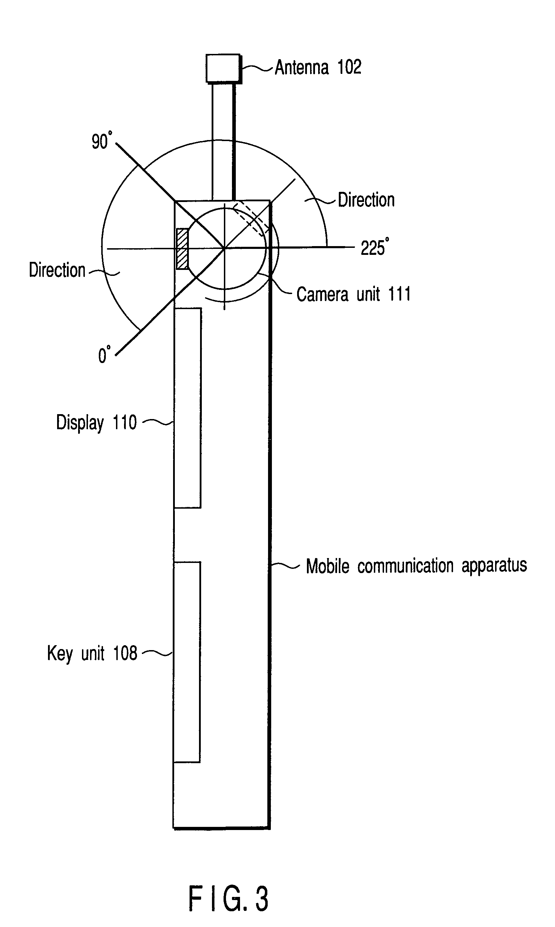

As described in FIG. 3, for example, the direction adjustment unit 113 can adjust a direction of the camera unit 111 between 0 degree and 225 degrees in this embodiment. The direction adjustment unit 113 detects the direction of the camera unit 111 and informs the detected direction of the control unit 101.

The control unit 101 in FIG. 1 can control all parts in the apparatus. For example, the control unit 101 executes voice communication or data communication. The control unit 101 can store image data in the memory 107 and display the stored image data on the display 110.

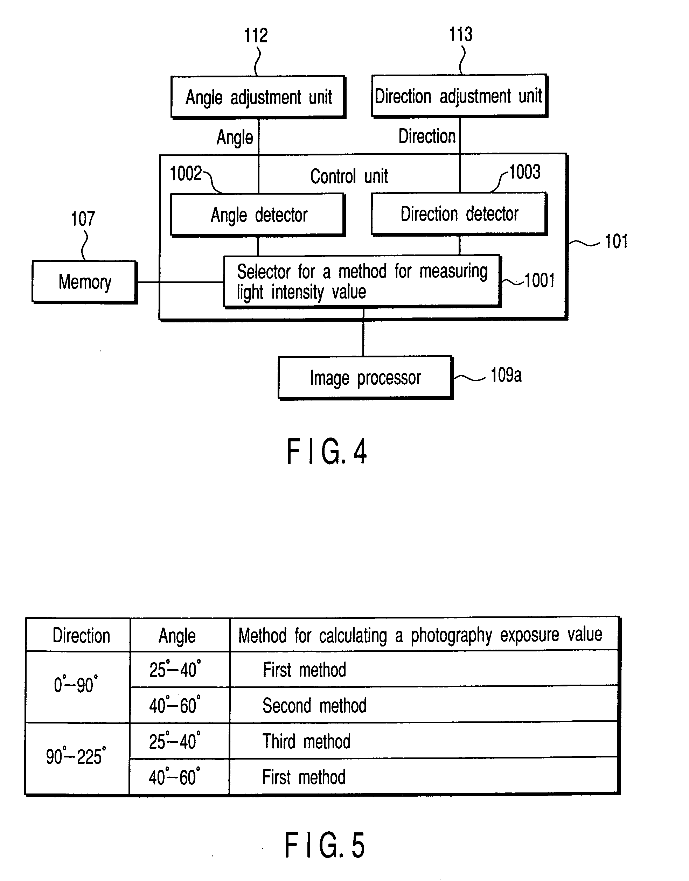

FIG. 4 shows that the control unit 101 has a selector 1001 for selecting a method for measuring light intensity value based on the detected direction and the detected angle. The control unit 101 has an angle detector 1002 and a direction detector 1003. The angle detector 1002 detects the data informed by the angle adjustment unit 102. The data includes an angle of the camera unit 111. The direction detector 103 detects the data informed by the direction adjustment unit 103. The data includes a direction of the camera unit 111.

The memory 107 in FIG. 2 stores a table for selecting a method for measuring light intensity value. The light intensity value is used to select the aperture value. FIG. 5 shows one example of the table stored in the memory 107.

When the detected direction equals to 0 degree or is more than 0 degree and less than 90 degrees, the user is likely using the apparatus to capture image data of the user. Referring to FIG. 5, when the detected direction equals to 0 degree or is more than 0 degree and less than 90 degrees and the detected angle equals to 25 degrees or is more than 25 degrees and less than 40 degrees, the control unit 101 instructs the image processor 109b to use a first method for determining a photography exposure to capture image data.

As described below, the method may include utilizing a specific portion of a photosensitive device to measure light intensity. In another example, when the detected direction equals to 0 degree or is more than 0 degree and less than 90 degrees and the detected angle equals to 40 degrees or is more than 40 degrees and less than 60 degrees, the control unit 101 instructs the image processor 109b to use a second method for determining a photography exposure to capture image data.

The second method may utilize a different portion of the photosensitive device to measure light intensity. In this embodiment, the user usually uses the apparatus to capture image data of a far away scene when the detected direction equals to 90 degrees or is more than 90 degrees and less than 225 degrees.

For example, when the detected direction equals to 90 degrees is more than 90 degrees and less than 225 degrees, and the detected angle equals to 25 degrees or is more than 25 degrees and less than 40 degrees, the control unit 101 instructs the image processor to use the first method for determining a photography exposure to capture image data.

When the detected direction equals to 90 degrees or is more than 90 degrees and less than 225 degrees, and the detected angle equals to 40 degrees or is more than 40 degrees and less than 60 degrees, the control unit 101 instructs the image processor to use a third method for determining a photography exposure to capture image data.

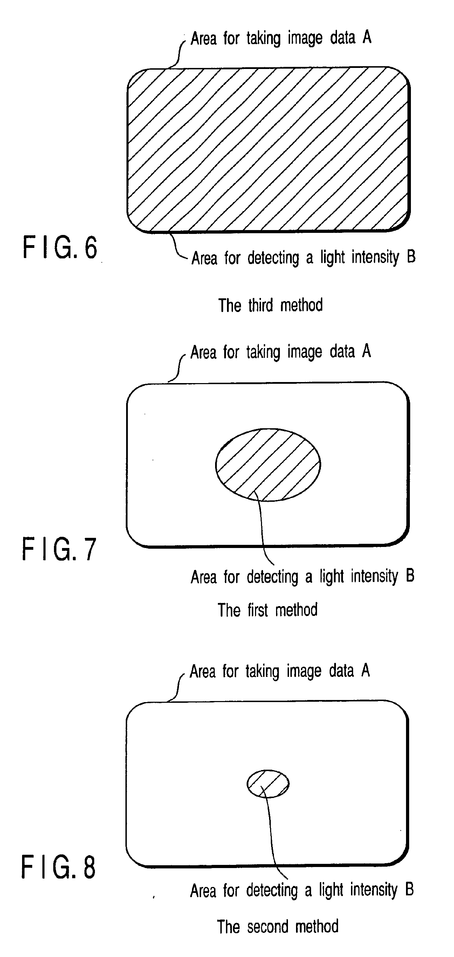

FIG. 6 shows the third method. The third method means that the image processor 109b detects the light intensity of all imaging elements of the camera unit 111 and calculates the average intensity value based on the all detected light intensities. The camera unit 111 determines a photography exposure value to capture image data based on the calculated average intensity value.

In the third method, the area for capturing image data (A) equals to the area for detecting a light intensity (B). In this situation, the camera unit 111 captures image data in a large area because it is assumed that a user of the apparatus is capturing image data of a far away scene.

FIG. 7 shows the first method. The first method means that the image processor 109b detects the light intensity of the imaging elements only in the area B and calculates the average intensity value based on the all detected light intensities only in the area B. The camera unit 111 determines a photography exposure value to capture image data based on the calculated average intensity value.

In the first method, the area for detecting a light intensity (B) is smaller than the area for capturing image data (A). The area B in the first method is smaller than the area B in the third method. In this situation, the camera unit 111 captures image data in a smaller area than that in the third method because it is assumed that the user of the apparatus is capturing image data of the user's face.

FIG. 8 shows the second method. The second method means that the image processor 109b detects the light intensity of the imaging elements only in the area B and calculates the average intensity value based on the all detected light intensities only in the area B. The camera unit 111 determines a photography exposure value to capture image data based on the calculated average intensity value.

In the second method, the area for detecting a light intensity (B) is smaller than the area for capturing image data (A). The area B in the second method is smaller than the area B in the first method.

A function for determining a photography exposure based on a detected direction and a detected angle will now be described.

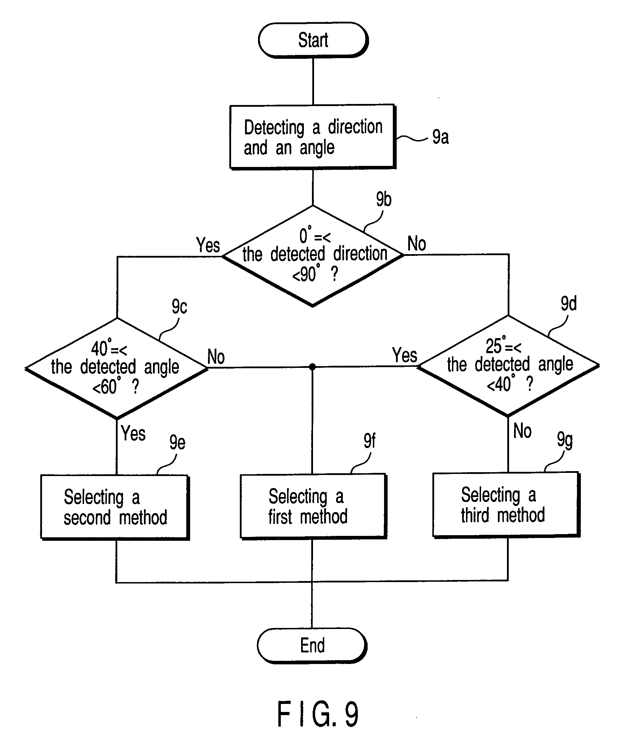

FIG. 9 shows a flow chart for selecting a method for determining a photography exposure in the camera unit 111 based on a detected direction and a detected angle. The control unit 101 executes the flow chart.

First, the control unit 101 receives data from the angle adjustment unit 112 and the direction adjustment unit 113. The data received from the angle adjustment unit 112 includes a detected angle of the camera unit 111. The data received from the direction adjustment unit 113 includes a detected direction of the camera unit 111 (step 9a).

When the detected direction equals to or is more than 0 degree and less than 90 degree (step 9b), the control unit 111 executes the process in step 9c.

When the detected direction neither does not equals to or is not more than 0 degree and is not less than 90 degree (step 9b), the control unit 111 executes the process in step 9d.

In this embodiment, the meaning that the detected direction does not equal to or is not more than 0 degree and is not less than 90 degrees has a meaning the detected direction is more than 90 degrees and less than 225 degrees because the camera unit can be turned between 0 degree and 225 degrees.

In the step 9c, if the detected angle equals to or is more than 40 degrees and less than 60 degrees, the control unit 101 executes the process in step 9e. If the detected angle equals to or is more than 25 degrees and less than 40 degrees, the control unit 101 executes the process in step 9f.

In the step 9d, if the detected angle equals to or is more than 25 degrees and less than 40 degrees, the control unit 101 executes the process in step 9f. When the detected angle equals to or is more than 40 degrees and less than 60 degrees, the control unit 101 executes the process in step 9g.

In the step 9e, the control unit 101 instructs the image processor 109b to use the second method for determining a photography exposure to capture image data. As described in FIG. 6, the image processor 109b determines a photography exposure to capture image data with the area (B) in the FIG. 6 for detecting a light intensity. The image processor 109b instructs the camera unit 111 to capture image data with the determined photography exposure.

In the step 9f, the control unit 101 instructs the image processor 109b to use the first method for determining a photography exposure to capture image data. As described in FIG. 5, the image processor 109b determines a photography exposure to capture image data with the area (B) in the FIG. 5 for detecting a light intensity. The image processor 109b instructs the camera unit 111 to capture image data with the determined photography exposure.

In the step 9g, the control unit 101 instructs the image processor 109b to use the third method for determining a photography exposure to capture image data. As described in FIG. 7, the image processor 109b determines a photography exposure to capture image data with the area (B) in the FIG. 6 for detecting a light intensity. The image processor 109b instructs the camera unit 111 to capture image data with the determined photography exposure.

As described above, the mobile communication apparatus in this embodiment can select a method for measuring light intensity value based on an angle of a camera unit and a direction of a camera unit. The mobile communication apparatus can calculate a photography exposure to capture image data based on the selected method.

The mobile communication apparatus can automatically select a third method described in FIG. 6 when the user captures image data of the view. The mobile communication apparatus can calculate a proper photography exposure by the selected third method.

The mobile communication apparatus can automatically select a first method described in FIG. 8 when the user captures image data of the user. The mobile communication apparatus can calculate a proper photography exposure by the selected first method.

The invention is not limited to the embodiment as described above.

A radio communication access method used in a mobile communication apparatus is not limited to Wideband Code Division Multiple Access (W-CDMA). The mobile communication apparatus can use another radio communication access method.

The number of the methods for measuring a light intensity value based on a detected direction and a detected angle of a camera unit is not limited to three. It is proper that the data table stored in the memory 107 can have more than two methods.

A degree for selecting a method for measuring a light intensity value is not limited to the embodiment. The degree depends on a mobile communication apparatus or a camera unit in the apparatus.

This invention is not limited to a cellular phone. A mobile communication apparatus can be an imaging apparatus, a Personal Digital Assistants (PDA), portable mobile cable phone, or any of an electronic device that captures image data.

## Claims

1. An imaging apparatus for capturing image data, the apparatus **characterized by** comprising:
a moveable camera unit (111) having a variable image field angle;
a direction detector (113) configured to detect a direction of the camera unit (111);
an image field angle detector (112) configured to detect the image field angle of the camera unit (111);
a photosensitive element (111) having a photosensitive surface area; and
a selector (101) configured to select which portion of the photosensitive element (111) will be used to calculate an exposure setting based on the detected direction and the detected image field angle.

2. The imaging apparatus according to claim 1, **characterized in that** the image data comprises a still picture.

3. The imaging apparatus according to claim 1, **characterized in that** the image data comprises a moving picture.

4. The imaging apparatus according to claim 1, **characterized in that** the photosensitive element (111) is included in the moveable camera unit (111).

5. The imaging apparatus according to claim 1, **characterized in that** the exposure setting comprises an aperture setting.

6. The imaging apparatus according to claim 1, **characterized in that** the exposure setting comprises an exposure time.

7. The imaging apparatus according to claim 1, **characterized by** further comprising a memory (107) configured to store data to select which portion of the photosensitive element (111) will be used to calculate an exposure setting based on the detected direction and the detected image field angle.

8. The imaging apparatus according to claim 7, **characterized in that** the memory (107) stored data to select which portion of the photosensitive element (111) will be used to calculate an exposure setting when a user captures image data of the user.

9. The imaging apparatus according to claim 7, **characterized in that** the memory (107) stored data to select which portion of the photosensitive element (111) will be used to calculate an exposure setting when a user captures image data of a far away scene.

10. A method in an imaging apparatus for capturing image data wherein the apparatus has a moveable camera unit (111) having a variable image field angle, the method **characterized by** comprising:
detecting a direction of the camera unit (111);
detecting an image field angle of the camera unit (111); and
selecting which portion of a photosensitive element (111) in the camera unit (111) will be used to calculate an exposure setting based on the detected direction and the detected image field angle.

11. The method according to claim 10, **characterized in that** the image data comprises a still picture.

12. The method according to claim 10, **characterized in that** the image data comprises a moving picture.

13. The method according to claim 10, **characterized in that** the exposure setting comprises an aperture setting.

14. The method according to claim 10, **characterized in that** the exposure setting comprises an exposure time.

15. The method according to claim 10, **characterized by** further comprising storing data to select which portion of the photosensitive element (111) will be used to calculate an exposure setting based on the detected direction and the detected image field angle.

16. The method according to claim 15, **characterized by** further including storing data to select which portion of the photosensitive element (111) will be used to calculate an exposure setting when a user captures image data of the user.

17. The method according to claim 15, **characterized by** further including storing data to select which portion of the photosensitive element (111) will be used to calculate an exposure setting when a user captures image data of a far away scene.

18. A control unit in an imaging apparatus for capturing image data wherein the apparatus has a moveable camera unit (111) having a variable image field angle, the control unit **characterized by** comprising:
first detector (113) configured to detect a direction of the camera unit (111);
second detector (112) configured to detect the image field angle of the camera unit (111); and
selector (101) configured to select which portion of a photosensitive element (111) in the camera unit (111) will be used to calculate an exposure setting based on the detected direction and the detected image field angle.

19. The control unit according to claim 18, **characterized in that** the image data comprises a still picture.

20. The control unit according to claim 18, **characterized in that** the image data comprises a moving picture.

21. The control unit according to claim 18, **characterized in that** the exposure setting comprises an aperture setting.

22. The control unit according to claim 18, **characterized in that** the exposure setting comprises an exposure time.

23. The control unit according to claim 18, **characterized in that** the apparatus has a memory (107) configured to store data to select which portion of the photosensitive element (111) will be used to calculate an exposure setting based on the detected direction and the detected image field angle.

24. The control unit according to claim 23, **characterized in that** the memory (109) stores data to select which portion of the photosensitive element (111) will be used to calculate an exposure setting when a user captures image data of the user.

25. The control unit according to claim 23, **characterized in that** the memory (109) stores data to select which portion of the photosensitive element (111) will be used to calculate an exposure setting when a user captures image data of a far away scene.

26. A mobile communication apparatus for capturing image data, the apparatus **characterized by** comprising:
a moveable camera unit (111) having a variable image field angle;
a direction detector (113) configured to detect a direction of the camera unit (111);
an image field angle detector (112) configured to detect the image field angle of the camera unit (111);
a photosensitive element (111) having a photosensitive surface area;
a selector (101) configured to select which portion of the photosensitive element (111) will be used to calculate an exposure setting based on the detected direction and the detected image field angle; and
a transmitter (103) configured to transmit image data.

27. The mobile communication apparatus according to claim 26, **characterized in that** the image data comprises a still picture.

28. The mobile communication apparatus according to claim 26, **characterized in that** the image data comprises a moving picture.

29. The mobile communication apparatus according to claim 26, **characterized in that** the photosensitive element (111) is included in the moveable camera unit (111).

30. The mobile communication apparatus according to claim 26, **characterized in that** the exposure setting comprises an aperture setting.

31. The mobile communication apparatus according to claim 26, **characterized in that** the exposure setting comprises an exposure time.

32. The mobile communication apparatus according to claim 26, **characterized by** further comprising a memory (107) configured to store data to select which portion of the photosensitive element (111) will be used to calculate an exposure setting based on the detected direction and the detected image field angle.

33. The mobile communication apparatus according to claim 32, **characterized in that** the memory (107) stored data to select which portion of the photosensitive element will be used to calculate an exposure setting when a user captures image data of the user.

34. The mobile communication apparatus according to claim 32, **characterized in that** the memory (107) stored data to select which portion of the photosensitive element (111) will be used to calculate an exposure setting when a user captures image data of a far away scene.

35. A method in a mobile communication apparatus for capturing image data wherein the apparatus has a moveable camera unit (111) having a variable image field angle, the method **characterized by** comprising:
detecting a direction of the camera unit (111);
detecting an image field angle of the camera unit (111);
selecting which portion of a photosensitive element (111) in the camera unit (111) will be used to calculate an exposure setting based on the detected direction and the detected image field angle; and
transmitting image data.

36. The method according to claim 35, **characterized in that** the image data comprises a still picture.

37. The method according to claim 35, **characterized in that** the image data comprises a moving picture.

38. The method according to claim 35, **characterized in that** the exposure setting comprises an aperture setting.

39. The method according to claim 35, **characterized in that** the exposure setting comprises an exposure time.

40. The method according to claim 35, **characterized by** further comprising storing data to select which portion of the photosensitive element (111) will be used to calculate an exposure setting based on the detected direction and the detected image field angle.

41. The method according to claim 40, **characterized by** further including storing data to select which portion of the photosensitive element (111) will be used to calculate an exposure setting when a user captures image data of the user.

42. The method according to claim 40, **characterized by** further including storing data to select which portion of the photosensitive element (111) will be used to calculate an exposure setting when a user captures image data of a far away scene.

43. A control unit in a mobile communication apparatus for capturing image data wherein the apparatus has a moveable camera unit (111) having a variable image field angle, the control unit **characterized by** comprising:
first detector (113) configured to detect a direction of the camera unit (111);
second detector (112) configured to detect an image field angle of the camera unit (111);
selector (101) configured to select which portion of a photosensitive element (111) in the camera unit (111) will be used to calculate an exposure setting based on the detected direction and the detected image field angle; and
transmitter (103) configured to transmit image data.

44. The control unit according to claim 43, **characterized in that** the image data comprises a still picture.

45. The control unit according to claim 43, **characterized in that** the image data comprises a moving picture.

46. The control unit according to claim 43, **characterized in that** the exposure setting comprises an aperture setting.

47. The control unit according to claim 43, **characterized in that** the exposure setting comprises an exposure time.

48. The control unit according to claim 43, **characterized in that** the apparatus has a memory (107) configured to store data to select which portion of the photosensitive element (111) will be used to calculate an exposure setting based on the detected direction and the detected image field angle.

49. The control unit according to claim 48, **characterized in that** the memory (107) stores data to select which portion of the photosensitive element (111) will be used to calculate an exposure setting when a user captures image data of the user.

50. The control unit according to claim 48, **characterized in that** the memory stores data to select which portion of the photosensitive element (111) will be used to calculate an exposure setting when a user captures image data of a far away scene.
